# EUROPÄISCHE PATENTSCHRIFT

(11) **EP 3 485 177 B1**
(45) Veröffentlichungstag und Bekanntmachung des Hinweises auf die Patenterteilung: **27.05.2020**
(21) Anmeldenummer: 17740372.2
(22) Anmeldetag: 13.07.2017
(51) Int. Cl.: F16D 3/223, F16C 33/38

(54) **VERFAHREN ZUR HERSTELLUNG EINES KÄFIGS FÜR EIN KUGELGLEICHLAUFGELENK**
METHOD FOR PRODUCING A CAGE FOR A CONSTANT-VELOCITY BALL JOINT
PROCÉDÉ DE FABRICATION D'UNE CAGE POUR UN JOINT HOMOCINÉTIQUE À BILLES

(30) Priorität: 15.07.2016 DE 102016113139
(43) Veröffentlichungstag der Anmeldung: 22.05.2019
(73) Patentinhaber: GKN Driveline Deutschland GmbH, 63073 Offenbach Am Main (DE)
(72) Erfinder: HAINZ, Volker, 63150 Heusenstamm (DE); KRANCIOCH, Norbert, 63073 Offenbach (DE); GÜNTHER, Johannes, 64750 Seckmauern (DE)
(74) Vertreter: Rössler, Matthias
(86) Internationale Anmeldenummer: PCT/EP2017/067710
(87) Internationale Veröffentlichungsnummer: WO 2018/011346

(56) Entgegenhaltungen:
- WO-A1-99/30052
- WO-A1-2015/076051
- US-A- 4 231 232
- US-A1- 2007 259 724

## Beschreibung

Die vorliegende Erfindung betrifft ein Verfahren zur Herstellung eines Käfigs für ein Kugelgleichlaufgelenk sowie einen Käfig für ein Kugelgleichlaufgelenk selbst. Bevorzugt wird ein hier beschriebener Käfig in Kugelgleichlaufverschiebegelenken eingesetzt.

Kugelgleichlaufverschiebegelenke (im Folgenden auch als Gelenk oder Kugelgleichlaufgelenk bezeichnet) kommen insbesondere bei PKW im Bereich von Seitenwellen oder in Längswellenanordnungen zum Einsatz. Die Längswellen dienen der Übertragung der Antriebskraft von einem Getriebe hin zu einer Achse. Insbesondere ist dabei das Getriebe im vorderen Bereich eines Kraftfahrzeugs angeordnet und die Längswellenanordnung dient der Übertragung der Antriebskräfte von diesem Getriebe hin zu einer Hinterachse. Bei derartigen Einsatzfällen muss das Kugelgleichlaufverschiebegelenk gleichermaßen kompakt und leicht ausgeführt sein und andererseits eine hohe Dauerfestigkeit aufweisen.

Kugelgleichlaufverschiebegelenke sind z. B. aus der WO 2005/057035 A1 oder der WO 2014/121832 A1 bekannt. Dort sind auch weitere Einsatzmöglichkeiten und allgemeine Anforderungen an diese Gelenke beschrieben, die hier zur Erläuterung herangezogen werden können.

Kugelgleichlaufverschiebegelenke mit Käfig weisen zumindest ein Gelenkaußenteil mit einer Drehachse und mit äußeren Kugelbahnen sowie ein Gelenkinnenteil mit inneren Kugelbahnen auf. Kugelgleichlaufverschiebegelenke umfassen weiter eine Vielzahl von drehmomentübertragenden Kugeln, die jeweils in einander zugeordneten äußeren und inneren Kugelbahnen geführt werden, und den Käfig, der mit einer Vielzahl von Käfigfenstern versehen ist, die jeweils eine oder mehrere der Kugeln aufnehmen.

Die drehmomentübertragenden Kugeln werden insbesondere von dem Kugelkäfig in einer Gleichlaufebene gehalten und von entsprechenden Paaren von äußeren und inneren Kugelbahnen geführt. Insbesondere verlaufen die Kugelbahnen im Montagebereich und Betriebsbereich entlang der Drehachse des Gelenks und weisen einen konstanten Abstand (in einer radialen Richtung) zur Drehachse auf. Insbesondere sind eine Kugel oder zwei Kugeln in jedem Käfigfenster angeordnet. Kugelgleichlaufverschiebegelenke weisen bevorzugt mindestens 6 oder 6+2n (n=1, 2, 3, ...) Kugeln auf. Der Käfig bewegt sich mit den Kugeln entlang der Drehachse des Gelenkaußenteils in der axialen Richtung.

Insbesondere verlaufen zumindest einzelne der äußeren und/oder inneren Kugelbahnen geneigt oder unter einem Bahnschrägungswinkel gegenüber der Mittelachse. Das bedeutet, die Kugeln bewegen sich entlang der Kugelbahnen nicht nur in der axialen Richtung sondern auch in Umfangsrichtung.

Gerade im Bereich der Großserienfertigung z. B. von Kraftfahrzeugen besteht der Wunsch, alle Komponenten mit reduziertem Gewicht und/oder reduzierten Kosten bereitzustellen. Gleichzeitig soll eine hohe Dauerfestigkeit des Kugelgleichlaufgelenks und der Anordnung im Einsatz gewährleistet werden.

Bei der Prüfung bestimmter Bauformen von Kugelgleichlaufverschiebegelenken wurde erkannt, dass es im Bereich von die Kugeln kontaktierenden Zonen des Käfigs zu Abplatzungen der Käfigoberfläche kommen kann. Als Ursache wurde identifiziert, dass sich die Kugeln bei diesen Bauformen von Kugelgleichlaufverschiebegelenken aus konstruktiven Gründen sehr nahe an der Innenumfangsfläche des Käfigs bewegen und damit die Kugelführungsflächen am Käfig dort hoch beanspruchen. Die auftretenden Schädigungen des Käfigs können zu einer Lebensdauerreduzierung des Gelenkes führen.

Es wurde versucht, diesen Effekt dadurch zu reduzieren, dass die Käfigfenster an dieses Bewegungsverhalten angepasst bereitgestellt werden. So kann nach dem Stanzen das z. B. nierenförmige Käfigfenster in dem Käfig einem Kalibrierprozess unterzogen werden. Dabei wird ein Kalibrierdorn in dem Käfigfenster angeordnet und nachfolgend der komplette Käfig durch eine in axialer Richtung wirkende Druckkraft gestaucht. Diese Stauchung des Käfigs bewirkt einen Materialfluss im Käfig, durch den eine Kugelführungsfläche im Käfigfenster in radialer Richtung nach innen vergrößert wird. Dabei wird das Material des Käfigs im Bereich der, an den in die axialen Richtungen weisenden Seiten des Käfigs angeordneten, Kugelführungsflächen in der radialen Richtung nach innen verschoben. Dieser Aufwurf an der inneren Umfangsfläche ist aber konstruktiv nicht definierbar, weil ein relativ unkontrollierter Materialfluss stattfindet. Insbesondere wird dabei die äußere Umfangsfläche des Käfigs durch ein Gesenk abgestützt, so dass eine Verschiebung des Materials nur in der radialen Richtung nach innen erfolgt.

Aus der US 2007/259724 A1 ist ein Käfig für ein Kugelgleichgelenk bekannt. Dabei sind die in axialer Richtung weisenden Wände der Käfigfenster dicker ausgeführt als die Umfangsrichtung weisenden Wände.

Aus der US 4,231,232 A ist ein Käfig für ein Kugelgleichgelenk bekannt, bei dem an einer Außenumfangsfläche Nuten im Bereich der Käfigfenster vorgesehen sind, so dass diese mit Zwischenwänden des Gelenkaußenteils zusammenwirken können.

Aus der WO 99/30052 A1 ist auf einen Käfig gerichtet, dessen Oberflächen zumindest teilweise durch einen Drehprozess nachbearbeitet werden.

Aus der WO 2015/076051 A1 ist ein Gelenkaußenteil bekannt, bei dem Trennwände zwischen den Kugelbahnen über einen Kaltschmiedeprozess so umgeformt werden, dass eine Überschneidung mit dem Käfig vermieden werden kann.

Hiervon ausgehend ist es Aufgabe der vorliegenden Erfindung, die im Zusammenhang mit dem Stand der Technik geschilderten Probleme wenigstens teilweise zu lösen. Es soll insbesondere ein Verfahren zur Herstellung eines Käfigs bereitgestellt werden, durch das eine konstruktiv definierbare Umformung des Käfigs im Bereich der Kugelführungsflächen möglich ist. Die Leistungsfähigkeit des Kugelgleichlaufverschiebegelenks im Betrieb soll gewährleistet sein. Die Lebensdauer des Kugelgleichlaufverschiebegelenks soll erhöht werden. Weiter soll ein Käfig vorgeschlagen werden, der insbesondere durch das Verfahren hergestellt wurde, wobei eine geeignet umgeformte Käfigführungsfläche realisiert ist.

Dies wird erreicht mit einem Verfahren gemäß den Merkmalen des Patentanspruchs 1 und mit einem Käfig gemäß den Merkmalen des Patentanspruchs 6. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Es wird ein Verfahren zur Herstellung eines Käfigs für ein Kugelgleichlaufgelenk vorgeschlagen, wobei der Käfig ringförmig ist und entlang einer Umfangsrichtung voneinander beabstandet angeordnete Käfigfenster zur Führung von Kugeln des Kugelgleichlaufgelenks aufweist. Jedes Käfigfenster weist zumindest auf einer Seite eine, in eine axiale Richtung weisende Kugelführungsfläche auf. Das Verfahren weist zumindest die folgenden Schritte auf:
a) Bereitstellen eines Käfigs mit Käfigfenstern;
b) Aufbringen zumindest einer Druckkraft über eine, in eine radiale Richtung weisende äußere Umfangsfläche des Käfigs in einem ersten Bereich zumindest einer Kugelführungsfläche zumindest eines Käfigfensters;
c) Verformen des Käfigs im ersten Bereich der mindestens einen Kugelführungsfläche, so dass die mindestens eine Kugelführungsfläche gegenüber einem angrenzenden zweiten Bereich des Käfigs in der radialen Richtung nach innen verschoben wird.

Insbesondere weist der Käfig (in Schritt a)) eine (zumindest teilweise oder überwiegend) sphärisch (z. B. eine kugelig) geformte äußere Umfangsfläche auf. In mindestens einem seitlichen Randbereich kann die äußere Umfangsfläche konisch geformt sein.

Bevorzugt weist der Käfig (in Schritt a)) eine (zumindest teilweise oder überwiegend) sphärisch geformte innere Umfangsfläche auf. In mindestens einem seitlichen Randbereich kann die innere Umfangsfläche konisch geformt sein.

In Schritt a) wird der Käfig mit, z. B. nierenförmig, insbesondere ausgestanzten, Käfigfenstern bereitgestellt. In Schritt b) wird insbesondere (ausschließlich) in dem ersten Bereich einer (bevorzugt aller) Kugelführungsfläche(n) eine in radiale Richtung weisende äußere Umfangsfläche des Käfigs mit einer Druckkraft beaufschlagt. In Schritt c) wird der Käfig in diesem ersten Bereich infolge der Drucckraft (plastisch) verformt. Dabei wird der erste Bereich gegenüber einem in der Umfangsrichtung angrenzend angeordneten zweiten Bereich in der radialen Richtung nach innen verschoben.

Nach Schritt c) weist der Käfig in allen Bereichen, außer in den umgeformten ersten Bereichen, insbesondere eine (mit diesem Verfahren im Wesentlichen unveränderte) einheitlich sphärisch geformte äußere Umfangsfläche bzw. eine (mit diesem Verfahren im Wesentlichen unveränderte) einheitlich sphärisch geformte innere Umfangsfläche auf.

Gegenüber diesen anderen Bereichen sind die umgeformten ersten Bereiche jeweils in der radialen Richtung nach innen verschoben bzw. versetzt angeordnet.

Die Druckkraft wirkt insbesondere in der radialen Richtung auf die äußere Umfangsfläche. Insbesondere wirkt sie zusätzlich in der axialen Richtung auf die äußere Umfangsfläche ein. Es wirkt insbesondere keine (oder eine wesentlich geringere) Druckkraft auf die Stirnseiten des Käfigs ein.

Insbesondere wirken zusätzliche Haltekräfte auf den Käfig, die aber an ihren Angriffspunkten an den Käfig (praktisch) keine (plastische) Verformungen herbeiführen.

Insbesondere findet eine (plastische) Verformung des Käfigs ausschließlich im ersten Bereich der Kugelführungsflächen statt.

Insbesondere wird zwischen den Schritten a) und b) oder nach Schritt c) in einem weiteren Schritt i) ein Kalibrierdorn in zumindest dem einen Käfigfenster angeordnet, insbesondere in jedem Käfigfenster. Die mindestens eine Kugelführungsfläche legt sich zumindest während des Schrittes c) (ggf. auch während des Schrittes b) oder in einem sich an Schritt i) anschließenden Stauchvorgang) an den (jeweiligen) Kalibrierdorn an.

Der Stauchvorgang umfasst das Aufbringen einer in der axialen Richtung wirkenden Druckkraft über die Stirnseiten des Käfigs.

Bei dem Stauchvorgang kann die mindestens eine Kugelführungsfläche entlang der axialen Richtung verschoben werden, so dass ein Abstand zwischen den in einem Käfigfenster gegenüberliegenden Kugelführungsflächen verringert wird.

Nachdem sich die mindestens eine Kugelführungsfläche an den Kalibrierdorn angelegt hat, kann der Stauchvorgang fortgesetzt werden, so dass zu den Kugelführungsflächen benachbart angeordnete (zweite) Bereiche weiter entlang der axialen Richtung verschoben werden, während die Kugelführungsflächen (im ersten Bereich) durch den Kalibrierdorn fixiert werden.

Gemäß einer bevorzugten Ausgestaltung wird in Schritt c) oder in einem sich an Schritt i) anschließenden Stauchvorgang der Käfig im ersten Bereich der mindestens einen Kugelführungsfläche so verformt, dass die mindestens eine Kugelführungsfläche gegenüber einem angrenzenden zweiten Bereich des Käfigs (zusätzlich) in der axialen Richtung verschoben wird, insbesondere weil während des Stauchvorgangs der erste Bereich an den Kalibrierdorn anstößt und der zweite Bereich in der axialen Richtung weiter nach innen verschoben wird. Diese Verformung in Richtung der axialen Richtung stellt insbesondere sicher, dass die einander in der axialen Richtung gegenüberliegend angeordneten Kugelführungsflächen eines Käfigfensters einen vorbestimmten Abstand voneinander aufweisen.

Gemäß einer weiteren Ausgestaltung wird nach Schritt c) oder nach Schritt i) bzw. nach dem auf Schritt i) folgenden Stauchvorgang eine mechanische Bearbeitung der Käfigführungsfläche vorgenommen (z. B. durch Fräsen). Durch diese mechanische Bearbeitung wird der geforderte Abstand genau eingestellt.

Gemäß einer bevorzugten Ausgestaltung weist das mindestens eine Käfigfenster auf beiden einander gegenüberliegenden Seiten jeweils eine Kugelführungsfläche auf, wobei in Schritt c) beide Kugelführungsflächen gegenüber (an den ersten Bereich in der Umfangsrichtung) angrenzenden zweiten Bereichen des Käfigs zumindest in der radialen Richtung nach innen verschoben werden..

Insbesondere bleibt eine Wanddicke (insbesondere gemessen in radialer Richtung) des Käfigs im ersten Bereich der Käfigführungsfläche während Schritt c), und insbesondere auch während eines sich an Schritt i) anschließenden Stauchvorgangs, konstant. Bevorzugt findet also kein Materialfluss in den ersten Bereich der Käfigführungsfläche statt, sondern das vorhandene Material in dem ersten Bereich wird gegenüber den angrenzenden zweiten Bereichen zumindest in der radialen Richtung verschoben.

Es wird zudem ein Käfig für ein Kugelgleichlaufgelenk vorgeschlagen, der insbesondere nach dem hier neu beschriebenen Verfahren hergestellt ist.

Der Käfig ist ringförmig und weist entlang einer Umfangsrichtung voneinander beabstandet angeordnete Käfigfenster zur Führung von Kugeln des Kugelgleichlaufgelenks auf. Jedes Käfigfenster weist zumindest auf einer Seite eine, in eine axiale Richtung weisende Kugelführungsfläche auf, wobei der Käfig im ersten Bereich der Kugelführungsfläche in einem Querschnitt quer zu einer Drehachse des Käfigs einen kleinsten Innendurchmesser und einen kleinsten Außendurchmesser aufweist.

Der Käfig weist im ersten Bereich der Kugelführungsfläche einen, gegenüber einem benachbart angeordneten zweiten Bereich, in der radialen Richtung nach innen verschobenen Wandbereich auf.

Insbesondere unterscheidet sich der kleinste Innendurchmesser (im ungeformten ersten Bereich) von einem Innendurchmesser eines (unmittelbar) benachbart angeordneten zweiten Bereichs des Käfigs um höchstens 3,0 %, insbesondere um höchstens 1,0 %. Insbesondere unterscheidet sich der kleinste Innendurchmesser (im ungeformten ersten Bereich) von einem Innendurchmesser eines (unmittelbar) benachbart angeordneten zweiten Bereichs des Käfigs um mindestens 0,3 %, insbesondere um mindestens 0,5 %.

Insbesondere unterscheidet sich der kleinste Außendurchmesser (im ungeformten ersten Bereich) von einem Außendurchmesser eines (unmittelbar) benachbart angeordneten zweiten Bereichs des Käfigs um höchstens 3,0 %, insbesondere um höchstens 1,0 %. Insbesondere unterscheidet sich der kleinste Außendurchmesser (im ungeformten ersten Bereich) von einem Außendurchmesser eines (unmittelbar) benachbart angeordneten zweiten Bereichs des Käfigs um mindestens 0,3 %, insbesondere um mindestens 0,5 %.

Insbesondere erstreckt sich der Käfig in der axialen Richtung zwischen einer ersten Stirnseite und einer zweiten Stirnseite, wobei der Käfig in der axialen Richtung zwischen der Kugelführungsfläche und jeder Stirnseite, in der Umfangsrichtung verlaufende Stege aufweist. Zumindest ein sich in der axialen Richtung erstreckender Teil zumindest eines Stegs ist in einem ersten Bereich gegenüber einem (in der Umfangsrichtung und/oder in axialer Richtung hin zur Stirnseite) angrenzenden (zweiten) Bereich des Käfigs in der radialen Richtung nach innen verschoben. Insbesondere ist der ganze Steg (also in axialer Richtung zwischen der Kugelführungsfläche und zumindest einer Stirnseite) in einem ersten Bereich gegenüber einem (in der Umfangsrichtung) angrenzenden zweiten Bereich des Käfigs in der radialen Richtung nach innen verschoben.

Es wird weiter ein Kugelgleichlaufgelenk mit einem Käfig vorgeschlagen, wobei der Käfig durch das neu vorgeschlagene Verfahren hergestellt wurde und/oder wie oben beschrieben ausgeführt ist. Das Kugelgleichlaufgelenk ist bevorzugt ein Kugelgleichlaufverschiebegelenk, in dem der Käfig gegenüber einem Gelenkaußenteil und/oder einem Gelenkinnenteil entlang einer axialen Richtung verschiebbar angeordnet ist.

Die Ausführungen zu dem neuen Verfahren gelten gleichermaßen für den neuen Käfig und das neue Gelenk und umgekehrt.

Es wird weiter also auch ein Kraftfahrzeug vorgeschlagen, das zumindest eine vorstehend angegebene Wellenanordnung umfasst.

Das hier erläuterte radiale Kalibrieren der Käfige durch Drücken bzw. Formen von nach innen versetzten Abschnitten der Käfigfenster kann insbesondere zu mindestens einem der folgenden Vorteile führen:
- noch größere Fensterflächen gegenüber dem Stand der Technik, wodurch die Kugel zentrierter im Fenster läuft, was zu einer Lebensdauersteigerung führen kann,
- ein prozesssicherer und beherrschbarer Umformprozess,
- mehr Material unter der Kugel im Betrieb, was zu einer Festigkeitssteigerung führen kann.

Die Erfindung, sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Gleiche Bezugszeichen bezeichnen gleiche Gegenstände, so dass ggf. Erläuterungen aus anderen Figuren ergänzend herangezogen werden können. Es zeigen schematisch:
- Fig. 1:: einen bekannten Käfig in einer perspektivischen Ansicht;
- Fig. 2:: einen Querschnitt des Käfigs nach Fig. 1;
- Fig. 3:: ein bekanntes Kalibrierverfahren für einen Käfig;
- Fig. 4:: einen durch das Kalibrierverfahren nach Fig. 3 hergestellten Käfig in einem Querschnitt;
- Fig. 5:: den Käfig nach Fig. 4 in einer perspektivischen Ansicht;
- Fig. 6:: einen durch das Verfahren hergestellten Käfig im Querschnitt;
- Fig. 7:: ein Detail aus Fig. 6;
- Fig. 8:: den Käfig nach Fig. 6 und 7 in einer perspektivischen Ansicht und
- Fig. 9:: eine weitere Ausführungsvariante des Käfigs in einer perspektivischen Ansicht.

Das den Käfig 1 umfassende Kugelgleichlaufverschiebegelenk 2 ist in den Figuren nicht dargestellt. In diesem Zusammenhang wird auf die eingangs erwähnte WO 2014/121832 A1 verwiesen, in der ein Kugelgleichlaufverschiebegelenk 2 mit Käfig 1 dargestellt ist.

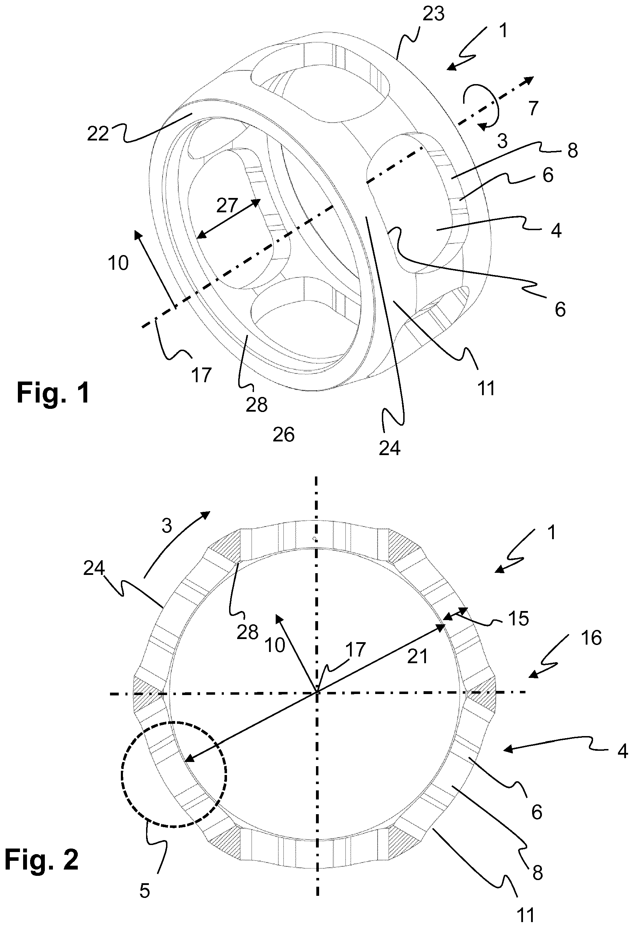

Fig. 1 zeigt einen bekannten Käfig 1 in einer perspektivischen Ansicht. Der Käfig 1 ist ringförmig und weist eine Drehachse 17 sowie entlang einer Umfangsrichtung 3 voneinander beabstandet angeordnete Käfigfenster 4 zur Führung von Kugeln 5 des Kugelgleichlaufgelenks 2 auf. Jedes Käfigfenster 4 weist auf beiden Seiten 6 jeweils eine, in eine axiale Richtung 7 weisende Kugelführungsfläche 8 auf. Der Käfig 1 weist eine sphärisch (z. B. eine kugelig) geformte äußere Umfangsfläche 11 sowie eine sphärisch geformte innere Umfangsfläche 28 auf.

Der Käfig 1 erstreckt sich in der axialen Richtung 7 zwischen einer ersten Stirnseite 22 und einer zweiten Stirnseite 23, wobei der Käfig 1 in der axialen Richtung 7 zwischen der Kugelführungsfläche 8 und jeder Stirnseite 22, 23, in der Umfangsrichtung 3 verlaufende Stege 24 aufweist.

Fig. 2 zeigt einen Querschnitt 16 des Käfigs 1 nach Fig. 1. Die Kugeln 5 sind in den Käfigfenstern 4 angeordnet und kontaktieren den Käfig 1 an den Kugelführungsflächen 8, insbesondere an dem Kontaktpunkt 26 in der Nähe der inneren Umfangsfläche 28. Der Käfig 1 weist zumindest im Bereich der Käfigführungsflächen 8 eine Wanddicke 15 in der radialen Richtung 10 auf.

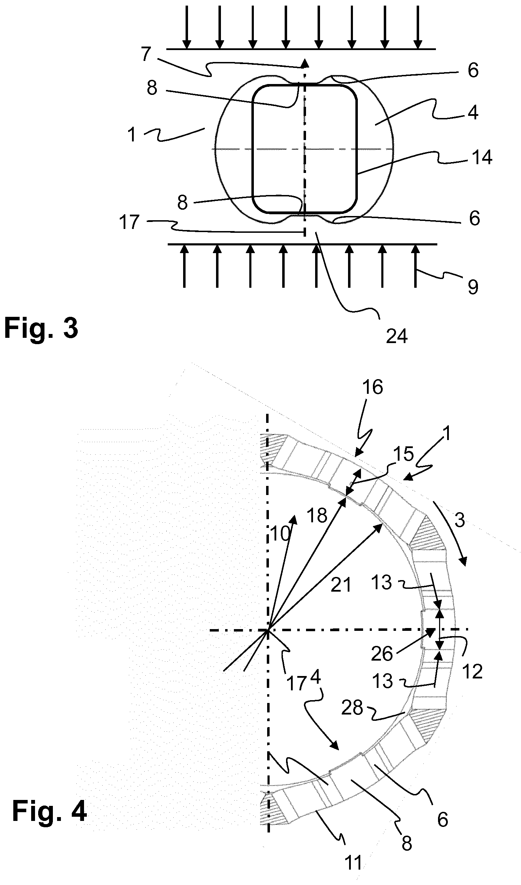

Fig. 3 zeigt ein bekanntes Kalibrierverfahren für einen Käfig 1. Nach dem Stanzen der hier nierenförmig dargestellten Käfigfenster 4 in den Käfig 1 wird ein Kalibrierprozess durchgeführt. Dabei wird ein Kalibrierdorn 14 in dem Käfigfenster 4 angeordnet und nachfolgend der komplette Käfig 1 durch eine in axialer Richtung 7 wirkende Druckkraft 9 gestaucht. Diese Stauchung des Käfigs 1 bewirkt einen Materialfluss im Käfig 1, durch den eine Kugelführungsfläche 8 im Käfigfenster 4 in radialer Richtung 10 nach innen vergrößert wird (siehe Fig. 4). Weiter kann durch den Stauchvorgang ein Abstand 27 zwischen den einander gegenüberliegenden Kugelführungsflächen 8 genau eingestellt werden.

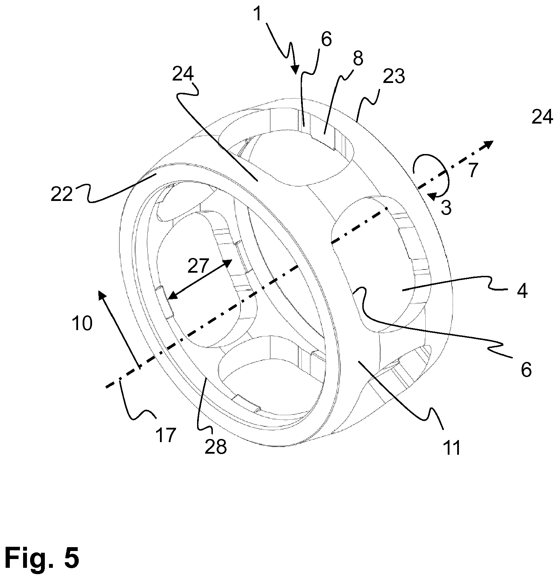

Fig. 4 zeigt einen durch das Kalibrierverfahren nach Fig. 3 hergestellten Käfig 1 in einem Querschnitt 16. Fig. 5 zeigt den Käfig 1 nach Fig. 4 in einer perspektivischen Ansicht. Die Fig. 4 und 5 werden im Folgenden gemeinsam beschrieben.

Durch das Kalibrierverfahren wird das Material des Käfigs 1 im ersten Bereich 12 der, an den in die axialen Richtungen 7 weisenden Seiten 6 des Käfigs 1 angeordneten Kugelführungsflächen 8 in der radialen Richtung 10 nach innen verschoben. Dieser Aufwurf an der inneren Umfangsfläche 28 ist konstruktiv nicht definierbar, da ein relativ unkontrollierter Materialfluss stattfindet. Infolge des Kalibrierverfahrens wird die Wanddicke 15 im ersten Bereich 12 der Kugelführungsfläche 8 (in der radialen Richtung 10 nach innen) vergrößert. Entsprechend weist der Käfig 1 im ersten Bereich 12 der Kugelführungsflächen 8 einen kleinsten Innendurchmesser 18 auf. In den an den ersten Bereich 12 angrenzenden zweiten Bereichen 13 weist der Käfig 1 einen größeren Innendurchmesser 21 auf.

Durch die Vergrößerung der Kugelführungsfläche 8 in der radialen Richtung 10 nach innen können (frühzeitige) Beschädigungen im Bereich der Kugelführungsfläche 8 nahe der inneren Umfangsfläche 28 verhindert werden.

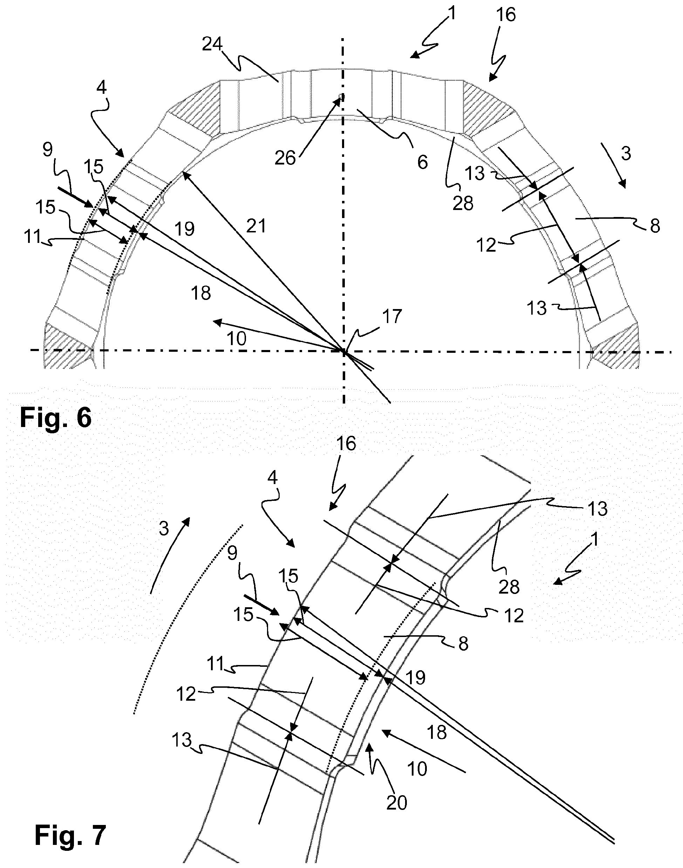

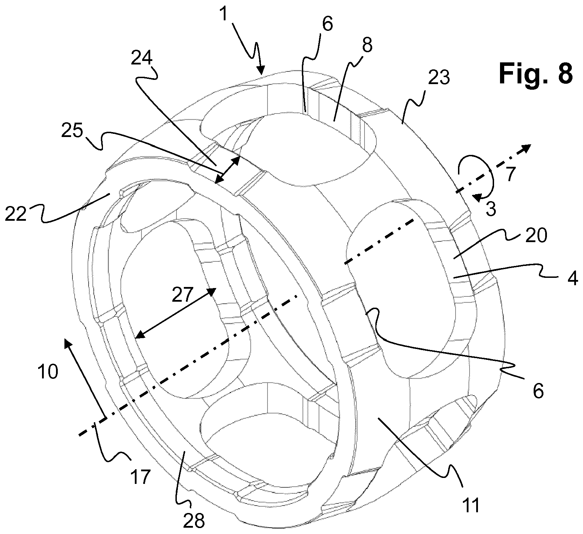

Fig. 6 zeigt einen durch das Verfahren hergestellten Käfig 1 im Querschnitt. Fig. 7 zeigt ein Detail aus Fig. 6. Fig. 8 zeigt den Käfig 1 nach Fig. 6 und 7 in einer perspektivischen Ansicht. Die Fig. 6 bis 8 werden im Folgenden gemeinsam beschrieben.

Der Käfig 1 ist ringförmig und weist entlang einer Umfangsrichtung 3 voneinander beabstandet angeordnete Käfigfenster 4 zur Führung von Kugeln 5 des Kugelgleichlaufgelenks 2 auf. Jedes Käfigfenster 4 weist auf jeder Seite 6 eine, in eine axiale Richtung 7 weisende Kugelführungsfläche 8 auf. Durch das Aufbringen einer Druckkraft 9 über eine in radiale Richtung 10 weisende äußere Umfangsfläche 11 des Käfigs 1 in einem ersten Bereich 12 der Kugelführungsflächen 8 der Käfigfenster 4 wird der Käfig 1 im ersten Bereich 12 verformt, so dass die Kugelführungsflächen 8 gegenüber den jeweils angrenzenden zweiten Bereichen 13 des Käfigs 1 in der radialen Richtung 10 nach innen verschoben werden.

Auch hier weist der Käfig 1 eine sphärisch geformte äußere Umfangsfläche 11 sowie eine sphärisch geformte innere Umfangsfläche 28 auf.

Während des Schrittes c) des Verfahrens und insbesondere auch während eines sich an Schritt i) anschließenden Stauchvorgangs bleibt eine Wanddicke 15 (gemessen in radialer Richtung 10) des Käfigs 1 im ersten Bereich 12 der Kugelführungsfläche 8 konstant. Es findet also kein Materialfluss in den ersten Bereich 12 der Kugelführungsfläche 8 statt, sondern das vorhandene Material in dem ersten Bereich 12 wird gegenüber den angrenzenden zweiten Bereichen 13 in der radialen Richtung 10 verschoben.

Der Käfig 1 weist nach Schritt c) im ersten Bereich 12 der Kugelführungsfläche 8 in einem Querschnitt 16 quer zu einer Drehachse 17 des Käfigs 1 einen kleinsten Innendurchmesser 18 und einen kleinsten Außendurchmesser 19 auf. Der kleinste Innendurchmesser 18 unterscheidet sich von einem Innendurchmesser 21 eines unmittelbar benachbart angeordneten zweiten Bereichs 13 des Käfigs 1. Gleiches gilt für den kleinsten Außendurchmesser 19 (gegenüber einem Außendurchmesser eines unmittelbar benachbart angeordneten zweiten Bereichs 13 des Käfigs 1).

Der Käfig 1 erstreckt sich in der axialen Richtung 7 zwischen einer ersten Stirnseite 22 und einer zweiten Stirnseite 23, wobei der Käfig 1 in der axialen Richtung 7 zwischen der Kugelführungsfläche 8 und jeder Stirnseite 22, 23, in der Umfangsrichtung 3 verlaufende Stege 24 aufweist. Zumindest ein sich in der axialen Richtung 7 erstreckender Teil 25 der Steg 24 ist in einem ersten Bereich 12 gegenüber einem (in der Umfangsrichtung 3 und/oder in axialer Richtung 7 hin zur Stirnseite 22, 23) angrenzenden zweiten Bereich 13 des Käfigs 1 in der radialen Richtung 10 nach innen verschoben (hier erstreckt sich der Teil 25 in der axialen Richtung 7 über den gesamten Steg 24).

Der Abstand 27 der Kugelführungsflächen 8 in der axialen Richtung 7 kann unmittelbar durch Schritt c) oder durch einen Stauchvorgang eingestellt werden, der nach einem Schritt i), ggf. nach Schritt c) durchgeführt wird. Der Abstand 27 kann auch durch eine mechanische Bearbeitung nach Schritt c) oder nach dem Stauchvorgang eingestellt werden.

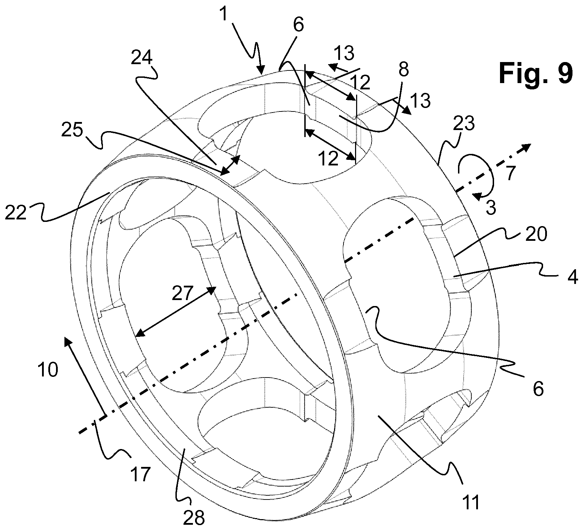

Fig. 9 zeigt eine weitere Ausführungsvariante des Käfigs 1 in einer perspektivischen Ansicht. Auf die Ausführungen zu Fig. 8 wird Bezug genommen. Im Unterschied zu dem in Fig. 8 dargestellten Käfig 1 ist hier nur ein sich in der axialen Richtung 7 erstreckender Teil 25 der Stege 24 in einem ersten Bereich 12 gegenüber einem, in der Umfangsrichtung 3 und in axialer Richtung 7 hin zur Stirnseite 22, 23, angrenzenden zweiten Bereich 13 des Käfigs 1 in der radialen Richtung 10 nach innen verschoben. Gegenüber der Ausführungsvariante in Fig. 8 erstreckt sich hier der Teil 25 in der axialen Richtung 7 ausgehend von dem Käfigfenster 4 nur bis zu den Stirnseiten 22, 23, wobei der Steg 24 an der Stirnseite 22, 23 selber nicht in der radialen Richtung 10 nach innen verschoben ist.

Das Verfahren ermöglicht eine definierte Umformung des Käfigs 1 in Teilbereichen, so dass eine Kugelführungsfläche 8 in der radialen Richtung 10 weiter innen angeordnet werden kann. Diese Verschiebung verhindert Beschädigungen des Käfigs 1 im Betrieb eines Kugelgleichlaufgelenks, da der Kontaktpunkt 26 der Kugel 5 mit der Kugelführungsfläche 8 nun in einer größeren Entfernung von der inneren Umfangsfläche 28 angeordnet ist.

### Bezugszeichenliste

- 1: Käfig
- 2: Kugelgleichlaufgelenk
- 3: Umfangsrichtung
- 4: Käfigfenster
- 5: Kugel
- 6: Seite
- 7: axiale Richtung
- 8: Kugelführungsfläche
- 9: Druckkraft
- 10: radiale Richtung
- 11: äußere Umfangsfläche
- 12: erster Bereich
- 13: zweiter Bereich
- 14: Kalibrierdorn
- 15: Wanddicke
- 16: Querschnitt
- 17: Drehachse
- 18: kleinster Innendurchmesser
- 19: kleinster Außendurchmesser
- 20: Wandabschnitt
- 21: Innendurchmesser
- 22: erste Stirnseite
- 23: zweite Stirnseite
- 24: Steg
- 25: Teil
- 26: Kontaktpunkt
- 27: Abstand
- 28: innere Umfangsfläche

## Patentansprüche

1. Verfahren zur Herstellung eines Käfigs (1) für ein Kugelgleichlaufgelenk (2), wobei der Käfig (1) ringförmig ist und entlang einer Umfangsrichtung (3) voneinander beabstandet angeordnete Käfigfenster (4) zur Führung von Kugeln (5) des Kugelgleichlaufgelenks (2) aufweist; wobei jedes Käfigfenster (4) zumindest auf einer Seite (6) eine, in eine axiale Richtung (7) weisende Kugelführungsfläche (8) aufweist, wobei das Verfahren zumindest die folgenden Schritte aufweist:
a) Bereitstellen eines Käfigs (1) mit Käfigfenstern (4);
b) Aufbringen zumindest einer Druckkraft (9) über eine in radiale Richtung (10) weisende äußere Umfangsfläche (11) des Käfigs (1) in einem ersten Bereich (12) zumindest einer Kugelführungsfläche (8) zumindest eines Käfigfensters (4);
c) Verformen des Käfigs (1) im ersten Bereich (12) der mindestens einen Kugelführungsfläche (8), so dass die mindestens eine Kugelführungsfläche (8) gegenüber einem angrenzenden zweiten Bereich (13) des Käfigs (1) in der radialen Richtung (10) nach innen verschoben wird.

2. Verfahren nach Patentanspruch 1, wobei zwischen den Schritten a) und b) oder nach Schritt c) in einem weiteren Schritt i) ein Kalibrierdorn (14) in zumindest dem einen Käfigfenster (4) angeordnet wird; wobei sich die mindestens eine Kugelführungsfläche (8) zumindest während des Schrittes c) oder in einem sich an Schritt i) anschließenden Stauchvorgang an den Kalibrierdorn (14) anlegt.

3. Verfahren nach einem der vorhergehenden Patentansprüche, wobei in Schritt c) der Käfig (1) im ersten Bereich (12) der mindestens einen Kugelführungsfläche (8) so verformt wird, dass die mindestens eine Kugelführungsfläche (8) gegenüber dem angrenzenden zweiten Bereich (13) des Käfigs (1) zusätzlich in der axialen Richtung (7) verschoben wird.

4. Verfahren nach einem der vorhergehenden Patentansprüche, wobei das mindestens eine Käfigfenster (4) auf beiden einander gegenüberliegenden Seiten (6) jeweils eine Kugelführungsfläche (8) aufweist, wobei in Schritt c) beide Kugelführungsflächen (8) gegenüber den angrenzenden zweiten Bereichen (13) des Käfigs (1) zumindest in der radialen Richtung (10) nach innen verschoben werden.

5. Verfahren nach einem der vorhergehenden Patentansprüche, wobei eine Wanddicke (15) des Käfigs (1) im ersten Bereich (12) der Kugelführungsfläche (8) während Schritt c) konstant bleibt.

6. Käfig (1) für ein Kugelgleichlaufgelenk (2), wobei der Käfig (1) ringförmig ist und entlang einer Umfangsrichtung (3) voneinander beabstandet angeordnete Käfigfenster (4) zur Führung von Kugeln (5) des Kugelgleichlaufgelenks (2) aufweist; wobei jedes Käfigfenster (4) zumindest auf einer Seite (6) eine, in eine axiale Richtung (7) weisende Kugelführungsfläche (8) aufweist; wobei der Käfig (1) in einem ersten Bereich (12) der Kugelführungsfläche (8) in einem Querschnitt (16) quer zu einer Drehachse (17) des Käfigs (1) einen kleinsten Innendurchmesser (18) und einen kleinsten Außendurchmesser (19) aufweist; wobei der Käfig (1) im ersten Bereich (12) der Kugelführungsfläche (8) einen, gegenüber einem benachbart angeordneten zweiten Bereich (13), in der radialen Richtung (10) nach innen verschobenen Wandabschnitt (20) aufweist.

7. Käfig (1) nach Patentanspruch 6, wobei sich der kleinste Innendurchmesser (18) von einem Innendurchmesser (21) eines unmittelbar benachbart angeordneten zweiten Bereichs (13) des Käfigs (1) um höchstens 1 % unterscheidet.

8. Käfig (1) nach einem der vorhergehenden Patentansprüche 6 und 7, wobei sich der Käfig (1) in der axialen Richtung (7) zwischen einer ersten Stirnseite (22) und einer zweiten Stirnseite (23) erstreckt, wobei der Käfig (1) in der axialen Richtung (7) zwischen der Kugelführungsfläche (8) und jeder Stirnseite (22, 23), in der Umfangsrichtung (3) verlaufende Stege (24) aufweist, wobei zumindest ein sich in der axialen Richtung (7) erstreckender Teil (25) zumindest eines Stegs (24) in einem ersten Bereich (12) gegenüber einem angrenzenden zweiten Bereich (13) des Käfigs (1) in der radialen Richtung (10) nach innen verschoben ist.

9. Käfig (1) nach Patentanspruch 8, wobei der ganze Steg (24) zwischen Kugelführungsfläche (8) und zumindest einer Stirnseite (22, 23) in dem ersten Bereich (12) gegenüber einem angrenzenden zweiten Bereich (13) des Käfigs (1) in der radialen Richtung (10) nach innen verschoben ist.

10. Kugelgleichlaufgelenk (2) mit einem Käfig (1), der durch ein Verfahren nach einem der vorhergehenden Patentansprüche 1 bis 5 hergestellt wurde oder mit einem Käfig (1) nach einem der vorhergehenden Patentansprüche 6 bis 9, wobei das Kugelgleichlaufgelenk (2) ein Kugelgleichlaufverschiebegelenk ist, in dem der Käfig (1) entlang einer axialen Richtung (7) verschiebbar angeordnet ist.

## Claims

1. Method for producing a cage (1) for a constant-velocity ball joint (2), wherein the cage (1) is annular and has cage windows (4) which are arranged spaced apart from one another along a circumferential direction (3) and are intended for guiding balls (5) of the constant-velocity ball joint (2); wherein each cage window (4) has at least on one side (6) a ball guiding surface (8) facing in an axial direction (7), the method comprising at least the following steps:
a) providing a cage (1) having cage windows (4);
b) applying at least one compressive force (9) via an outer circumferential surface (11) of the cage (1), facing in a radial direction (10), in a first region (12) of at least one ball guiding surface (8) of at least one cage window (4);
c) deforming the cage (1) in the first region (12) of the at least one ball guiding surface (8), so that the at least one ball guiding surface (8) is displaced inwardly in the radial direction (10) with respect to an adjacent second region (13) of the cage (1).

2. Method as claimed in claim 1, wherein, between steps a) and b) or after step c), in a further step i), a calibrating mandrel (14) is arranged in at least one cage window (4); wherein, at least during step c) or in an upsetting operation following step i), the at least one ball guiding surface (8) comes to lie against the calibrating mandrel (14).

3. Method as claimed in one of the preceding claims, wherein, in step c), the cage (1) is deformed in the first region (12) of the at least one ball guiding surface (8) in such a way that the at least one ball guiding surface (8) is additionally displaced in the axial direction (7) with respect to the adjacent second region (13) of the cage (1).

4. Method as claimed in one of the preceding claims, wherein the at least one cage window (4) has on each of both sides (6) lying opposite one another a ball guiding surface (8), wherein, in step c), both ball guiding surfaces (8) are at least displaced inwardly in the radial direction (10) with respect to the second regions (13) of the cage (1) that are adjacent.

5. Method as claimed in one of the preceding claims, wherein a wall thickness (15) of the cage (1) in the first region (12) of the ball guiding surface (8) remains constant during step c).

6. Cage (1) for a constant-velocity ball joint (2), wherein the cage (1) is annular and has cage windows (4) which are arranged spaced apart from one another along a circumferential direction (3) and are intended for guiding balls (5) of the constant-velocity ball joint (2); wherein each cage window (4) has at least on one side (6) a ball guiding surface (8) facing in an axial direction (7); wherein the cage (1) has in a first region (12) of the ball guiding surface (8) a smallest inside diameter (18) and a smallest outside diameter (19) in a cross section (16) transverse to an axis of rotation (17) of the cage (1); wherein the cage (1) has in the first region (12) of the ball guiding surface (8) a wall portion (20) that is displaced inwardly in the radial direction (10) with respect to an adjacently arranged second region (13).

7. Cage (1) as claimed in claim 6, wherein the smallest inside diameter (18) differs from an inside diameter (21) of a second region (13) of the cage (1) that is arranged directly alongside by at most 1%.

8. Cage (1) as claimed in either of the preceding claims 6 and 7, wherein the cage (1) extends in the axial direction (7) between a first end face (22) and a second end face (23), wherein the cage (1) has between the ball guiding surface (8) and each end face (22, 23) in the axial direction (7) lands (24) running in the circumferential direction (3), wherein at least a part (25) of at least one land (24) that extends in the axial direction (7) is displaced inwardly in the radial direction (10) in a first region (12) with respect to a second region (13) of the cage (1) that is adjacent.

9. Cage (1) as claimed in claim 8, wherein the entire land (24) between the ball guiding surface (8) and at least one end face (22, 23) is displaced inwardly in the radial direction (10) in the first region (12) with respect to a second region (13) of the cage (1) that is adjacent.

10. Constant-velocity ball joint (2) with a cage (1), which has been produced by a method as claimed in one of the preceding claims 1 to 5, with a cage (1) as claimed in one of the preceding claims 6 to 9, wherein the constant-velocity ball joint (2) is a constant-velocity slip ball joint, in which the cage (1) is arranged displaceably along an axial direction (7).

## Revendications

1. Procédé de fabrication d'une cage (1) pour un joint homocinétique à billes (2), la cage (1) étant annulaire et présentant des fenêtres de cage (4) espacées les unes des autres le long d'une direction périphérique (3) pour guider des billes (5) du joint homocinétique à billes (2); chaque fenêtre de cage (4) présentant au moins d'un côté (6) une surface de guidage de billes (8) tournée dans une direction axiale (7), le procédé présentant au moins les étapes suivantes:
a) fourniture d'une cage (1) avec des fenêtres de cage (4);
b) application d'au moins une force de pression (9) sur une surface périphérique extérieure (11) de la cage (1) tournée dans une direction radiale (10) dans une première région (12) d'au moins une surface de guidage de billes (8) d'au moins une fenêtre de cage (4);
c) déformation de la cage (1) dans la première région (12) de l'au moins une surface de guidage de billes (8) de telle sorte que l'au moins une surface de guidage de billes (8) soit déplacée vers l'intérieur par rapport à une deuxième région adjacente (13) de la cage (1) dans la direction radiale (10).

2. Procédé selon la revendication 1, dans lequel, entre les étapes a) et b) ou après l'étape c) dans une étape supplémentaire i), un mandrin d'étalonnage (14) est disposé dans au moins l'une des fenêtres de cage (4); l'au moins une surface de guidage de billes (8), au moins pendant l'étape c) ou dans une opération de compression suivant l'étape i), s'appliquant contre le mandrin d'étalonnage (14).

3. Procédé selon l'une quelconque des revendications précédentes, dans lequel, à l'étape c), la cage (1) dans la première région (12) de l'au moins une surface de guidage de billes (8) est déformée dans une mesure telle que l'au moins une surface de guidage de billes (8) soit déplacée en outre dans la direction axiale (7) par rapport à la deuxième région adjacente (13) de la cage (1).

4. Procédé selon l'une quelconque des revendications précédentes, dans lequel l'au moins une fenêtre de cage (4) présente à chaque fois une surface de guidage de billes (8) sur deux côtés opposés (6), à l'étape c) les deux surfaces de guidage de billes (8) étant déplacées vers l'intérieur au moins dans la direction radiale (10) à l'étape c) par rapport aux deux régions adjacentes (13) de la cage (1).

5. Procédé selon l'une quelconque des revendications précédentes, dans lequel une épaisseur de paroi (15) de la cage (1) dans la première région (12) de la surface de guidage de billes (8) reste constante pendant l'étape c).

6. Cage (1) pour un joint homocinétique à billes (2), la cage (1) étant annulaire et présentant des fenêtres de cage (4) espacées les unes des autres le long d'une direction périphérique (3) pour guider des billes (5) du joint homocinétique à billes (2), chaque fenêtre de cage (4) présentant au moins d'un côté (6) une surface de guidage de billes (8) tournée dans une direction axiale (7); la cage (1) présentant, dans une première région (12) de la surface de guidage de billes (8) dans une section transversale (16) transversalement à un axe de rotation (17) de la cage (1), un diamètre intérieur minimal (18) et un diamètre extérieur minimal (19); la cage (1), dans la première région (12) de la surface de guidage de billes (8), présentant une portion de paroi (20) déplacée vers l'intérieur dans la direction radiale (10) par rapport à une deuxième région (13) disposée en position adjacente.

7. Cage (1) selon la revendication 6, dans laquelle le diamètre intérieur minimal (18) se distingue de 1 % au plus d'un diamètre intérieur (21) d'une deuxième région (13) de la cage (1) disposée en position directement adjacente.

8. Cage (1) selon l'une quelconque des revendications précédentes 6 et 7, la cage (1) s'étendant dans la direction axiale (7) entre un premier côté frontal (22) et un deuxième côté frontal (23), la cage (1) présentant des nervures (24) s'étendant dans la direction périphérique (3), dans la direction axiale (7) entre la surface de guidage de billes (8) et chaque côté frontal (22, 23), au moins une partie (25) d'au moins une nervure (24) s'étendant dans la direction axiale (7) dans une première région (12) étant déplacée vers l'intérieur dans la direction radiale (10) par rapport à une deuxième région adjacente (13) de la cage (1).

9. Cage (1) selon la revendication 8, dans laquelle la nervure (24) dans sa totalité est déplacée vers l'intérieur dans la direction radiale (10) entre la surface de guidage de billes (8) et au moins un côté frontal (22, 23) dans la première région (12) par rapport à une deuxième région adjacente (13) de la cage (1).

10. Joint homocinétique à billes (2) comprenant une cage (1) qui a été fabriquée avec un procédé selon l'une quelconque des revendications précédentes 1 à 5, ou comprenant une cage (1) selon l'une quelconque des revendications précédentes 6 à 9, le joint homocinétique à billes (2) étant un joint homocinétique à billes déplaçable dans lequel la cage (1) est disposée de manière déplaçable le long d'une direction axiale (7).
